# EUROPÄISCHE PATENTANMELDUNG

(11) **EP 1 449 437 A2**
(43) Veröffentlichungstag der Anmeldung: **25.08.2004**
(21) Anmeldenummer: 04100454.0
(22) Anmeldetag: 06.02.2004
(51) Int. Cl.: A21C 3/02

(54) **Verfahren und Anordnung zur Herstellung eines Teigbands in mehreren Prozess-Abschnitten**

(30) Priorität: 07.02.2003 DE 10305208
(71) Anmelder: Fritsch GmbH, 97348 Markt Einersheim (DE)
(72) Erfinder: Bernhardt, Udo, 97346 Iphofen (DE)
(74) Vertreter: Götz, Georg Alois, Dipl.-Ing.

(57) **Zusammenfassung**

Maschinelles Teigband-Herstellungsverfahren, bei dem Teigmasse einem Formspalt (1) zugeführt wird, in dem die Teigmasse oder ein vorgeformtes Roh-Teigband (19) zu einem Teigband (9) verarbeitet und herausbefördert wird, wobei der Verarbeitungs- und Förderprozess in örtlich und zeitlich abgegrenzten, aufeinander folgenden Prozess-Abschnitten (2,X;5,Y) durchgeführt wird, wobei in wenigstens einem der Abschnitte (5,Y) mittels einer diesem Abschnitt zugeordneten Formspaltbegrenzung (5,S2) elastisch oder federnd Druck auf die Teigmasse ausgeübt wird.

## Beschreibung

Die Erfindung betrifft ein maschinelles Teigbandherstellungsverfahren, bei dem Teigmasse einem Formspalt zugeführt wird. Darin wird die Teigmasse zu einem Teigband verarbeitet und herausbefördert. Der Verarbeitungs- und Förderprozeß findet in örtlich und zeitlich abgegrenzten, aufeinanderfolgenden Prozeß-Abschnitten statt. Ferner betrifft die Erfindung eine Anordnung zur Herstellung eines Teigbands, wozu ein Formspalt gebildet ist, der begrenzt ist mit einem Satelliten- oder Kalibrierkopf einerseits und einer gegenüberliegenden Form- und Fördereinrichtung andererseits. Letztere weißt mehrere, in Förderrichtung hintereinander angeordnete Form-Förderglieder oder -organe auf.

Aus DE 44 45 506 A1 ist eine Ausrollvorrichtung für Teig bekannt, bei der ein Form-Spalt durch eine obere, größere Ausrollwalze (Kalibrierkopf) und durch wenigstens zwei kleinere, von unten gegenüberliegende Ausrollwalzen gebildet ist, die in Förderrichtung hintereinander angeordnet sind. Dadurch soll der Effekt einer Kompression mit allmählicher Extrusion erzielt werden, wobei Diskontinuitäten, Kontraktionen und plötzliches Strecken vermieden sind. Mit dieser bekannten Anordnung sollen hohe Abwalzgrade ohne Spannungserzeugung erzielbar sein.

Aus EP 0 953 287 B1 ist eine Vorrichtung zum Strecken von Brotteig oder dergleichen bekannt, bei der unterhalb eines an sich bekannten Satellitenkopfes eine Mehrzahl von Förderrollen in Förderrichtung hintereinander zur Bildung eines mehrgliedrigen Abwalzspalts angeordnet sind. Zusätzlich ist noch stromabwärts dieser Förderrollen unterhalb des Satellitenkopfes eine gebogene Platte zur Bildung eines zweiten Auswalzspalts angeordnet, worin die Teigmasse bzw. das Teigband weiter gepresst werden. Über die gebogene Platte gleitet auf deren Oberfläche das Förderband, welches durch die vorausgehenden Förderrollen angetrieben wird. Damit soll eine einheitliche Dicke des Teigbands erzielt werden. Gleichzeitig soll die gebogene Platte zu einer kontinuierlichen Förderoberfläche führen. Indem eine Platte naturgemäß aus hartem Material gebildet ist, ergibt sich im letzten Formspalt-Abschnitt gemäß diesem Stand der Technik ein harter Widerstand für den Teigformungsprozeß, der sicherlich zur einheitlichen Förderoberfläche und Teigdicke beitragen soll.

Dem gegenüber liegt der Erfindung die Aufgabe zugrunde, ein Verfahren und eine Anordnung zur Teigformung in einem Abwalz-Formspalt so auszugestalten, dass unter Beibehaltung eines hohen Abwalzgrads ein erhöhter Effekt der Teigschonung erzielt wird.

Zur Lösung werden das im Patentanspruch 1 angegebene Teigband-Herstellungsverfahren sowie die im Patentanspruch 7 angegebene Anordnung zur Herstellung eines Teigbands vorgeschlagen. Optionale, zweckmäßige und vorteilhafte Ausgestaltungen ergeben sich aus den abhängigen Ansprüchen.

Insbesondere wenn im letzten Prozeßabschnitt der Teigverarbeitung und - förderung erfindungsgemäß der elastisch-federnde Druck auf die Teigmasse ausgeübt wird, lässt sich besonders teigschonend ein Abwalzschritt realisieren. Das in Formung befindliche Teigband kann durch den elastischen oder federnden Druck gleichsam wegschwingen, wodurch die Teigmasse entlastet wird und fließen kann. Die für einen entsprechenden Abwalzschritt resultierende Elastizität ergibt eine Teigentspannung, wodurch insbesondere einem Aufreißen des Teigs im Randbereich entgegengewirkt wird. Unter diesen Umständen besteht eine zweckmäßige Erfindungsausbildung darin, dass der elastisch-federnde Druck wenigstens im Formspaltabschnitt mit der kleinsten Spaltbreite auf die Teigmasse ausgeübt wird. Gerade dort ist eine Entlastung und Entspannung der Teigstruktur geboten.

Gemäß einer optionalen Erfindungsausbildung werden das Verfahren und die Anordnung mit einem elastischen Förderband realisiert, das wenigstens einen dem Satelliten- oder Kalibrierkopf gegenüberliegenden Bandabschnitt aufweist.

Dieser ist zwischen wenigstens zwei Auflage- oder Umlenkstellen frei federbar gespannt. Zweckmäßig wird der elastische Bandabschnitt gegenüber der vorausgehenden Teigförderrichtung nach Art einer Rampe ansteigend geführt, so dass ein ausreichend enger Formspalt zwischen dem Bandabschnitt und dem Kalibrier- oder Satellitenkopf beibehalten wird. Mit dem elastischen Bandabschnitt wird eine federnde Widerlager-Funktion gegenüber dem Satelliten- oder Kalibrierkopf realisiert, weil der Bandabschnitt bzw. das elastische Förderband federnd nachgiebig auslenkbar sind.

Vor allem wenn das dem elastischen Förderband mit dem gegenüberliegenden Bandabschnitt vorausgehende Förderorgan als dem Kalibrier- oder Satellitenkopf gegenüberliegende Basiswalze oder dergleichen ausgebildet ist, ist es zweckmäßig, wenn der der Basiswalze nächstliegende Endbereich mit dem elastischen Bandabschnitt des elastischen Förderbandes keilförmig und/oder nach Art einer Messerkante gestattet ist. Dann kann das schon teilweise geformte Teigband von der Basiswalze mittels der resultierenden "Messerkante abgeschält" werden, wobei der Wandabschnitt die Teigentspannung und - entlastung bewirkt. Denn er bildet die dem Satelliten- oder Kalibrierkopf gegenüberliegende Seite des keil- oder messerkantenförmigen Endes des Bandförderers.

Dem Eingangs genannten Stand der Technik mit den unterhalb des Kalibrieroder Satellitenkopfes angeordneten Förderrollen oder Auswalzzylindern ist der Nachteil gemeinsam, dass sich zwischen diesen einzelnen Form-Förderorganen gleichsam Nester mit Mehl bilden: Mehl, das zur Verhinderung der Teigverklebung eingesetzt wird, kann von einer Förder-Formwalze nicht zur nächsten Förder-Formwalze übergeben werden. Zwischen beiden Förder-Formwalzen Abstreifer einzubauen, ist aufwendig.

Der Erfindung liegt die Aufgabe zugrunde, bei einem Verfahren und einer Anordnung zur Herstellung von Teig mittels eines Formspalts, der mittels mehrerer, hintereinander angeordneter Förderorgane auf der einen Seite begrenzt ist, eine effektive Teigförderung erzielen zu können.

Zur Lösung werden das im Patentanspruch 4 angegebene Teigband-Herstellungsverfahren sowie die im Patentanspruch 16 angegebene Anordnung zur Teigband-Herstellung vorgeschlagen. Vorteilhafte, optionale Ausgestaltungen ergeben sich aus den abhängigen Patentansprüchen.

Indem also erfindungsgemäß Mehl-Übertragungsmittel eingesetzt werden, wodurch das Mehl zumindest teilweise von einem Prozeß-Abschnitt auf einen nachfolgenden übertragen wird, steht auch noch in den letzten Verarbeitungsund Förder-Prozeßabschnitten Mehl zur Verfügung, um ein Verkleben des Teigbandes auf Förder-Formorganen zu verhindern. Dies lässt sich besonders dadurch realisieren, dass zwei aufeinanderfolgende Prozeß-Abschnitte sich einander räumlich und/oder zeitlich überlappen. Gemäß einer besonders vorteilhaften Ausbildung bestehen die Übertragungsmittel darin, aufeinanderfolgende Förderorgane bzw. Prozeßabschnitte zur Mehlübertragung in Kontakt und/oder Eingriff miteinander zu bringen.

In konkreter Realisierung dieses Gedankens liegen zwei aufeinanderfolgende Form-Förderorgane mit solchen Flächen aneinander, welche zum Gleiten gegeneinander ausgebildet sind. Dies kann zweckmäßig eine dem Satellitenoder Kalibrierkopf abgewandte Seite oder Schenkel des oben genannten, keiloder messerkantenförmigen Endbereichs des Bandförderers mit dem elastischen Bandabschnitt sein, welche Seite oder Schenkel dann vorzugsweise von oben auf dem vorausgehenden Form-Förderorgan aufliegt. Dadurch lässt sich überschüssiges Mehl beispielsweise von einer Basiswalze als vorausgehendes Form-Förderorgan abnehmen und auf den Bandförderer übertragen. In weiterer Folge wird die Unterseite des zu formenden Teigbandes bemehlt, so dass der Teig selber nicht mehr auf dem Förderband klebt.

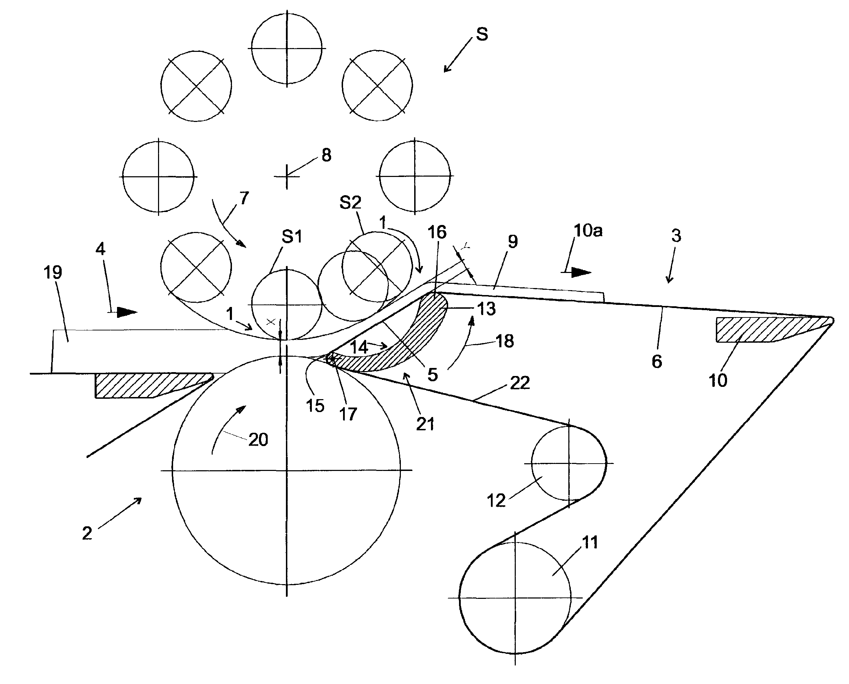

Weitere Einzelheiten, Merkmale, Merkmalskombinationen, Ausführungsformen und Wirkungen auf der Basis der Erfindung ergeben sich aus der nachfolgenden Beschreibung eines bevorzugten Ausführungsbeispiels der Erfindung sowie aus der Zeichnung. Diese zeigt in schematischer Längsansicht eine Anordnung zur Teigband-Herstellung mittels eines Förder- und Formspalts.

Gemäß Zeichnung ist ein Teigband-Formspalt 1 zwischen einem an sich bekannten Satellitenkopf S (vgl. zum Beispiel EP 0 953 287 B1, Bezugsziffern 11, 12) einerseits und zwei aufeinanderfolgenden Förderorganen 2, 3 mit unterschiedlichen Spaltbreiten X, Y andererseits gebildet. Die größere Spaltbreite X für den ersten Verarbeitungs- und Förder-Prozeßabschnitt wird von dem in Förderrichtung 4 ersten Förderorgan 2, im gezeichneten Beispiel eine Basiswalze, zusammen mit den gegenüberliegenden, umlaufenden Satelllitenrollen S1, S2, ... definiert. Die kleinere Spaltbreite Y für den nachfolgenden, zweiten Prozeßabschnitt ist gebildet einerseits durch einen dem Satellitenkopf S gegenüberliegenden Bandabschnitt 5 eines elastischen Förderbands 6, welches das zweite bzw. letzte Förderorgan 3 ausmacht. Andererseits wird der Formspalt 1 im zweiten Prozeßabschnitt durch die jeweils dem Bandabschnitt 5 gegenüberliegende Satellitenrolle S1, S2, ... begrenzt. Wie an sich bekannt, werden die einzelnen Satellitenrollen S1, S2, ... in einer Umlaufrichtung 7 um ein Zentrum 8 planetenartig bewegt.

Das Förderband 6, das auch zum Abführen und Weitertransport des Teigbandes 9 aus dem Formspalt 1 dient, ist an einem dem Teigspalt 1 entfernten Ende des entsprechenden Bandförderers um ein Keilstück 10 zur Bildung eines Übergabeendes an eine nächste Teiglinienkomponente geschlungen. In weiterer Förderband-Umlaufrichtung 10a ist das Förderband 6 um zwei Umlenkrollen 11, 12 und dann um ein gekrümmtes Führungsprofil 13 geführt, wobei sich dann der Förderband-Umlauf 10a schließt. Das Führungsprofil 13 besitzt in seiner Längsrichtung etwa die Form einer Banane, wobei die konkave Wölbung 14 dem elastisch federnden Bandabschnitt 5 direkt gegenüberliegt. Die Enden des Bananen-Führungsprofils 13 bilden Auflagestellen oder -enden 15, 16, worüber das Förderband 6 beispielsweise mittels einer oder beider Umlenkrollen 11, 12 gleitend angetrieben bzw. gezogen wird. Zwischen den beiden Enden bzw. Auflagestellen 15, 16 des Führungsprofils 13 kann der Bandabschnitt 5 elastisch federnd zur konkaven Wölbung hin ausgelenkt werden.

An seinem ersten Auflageende 15 ist das Führungsprofil 13 über eine Gelenkstelle 17 nach oben und unten in Schwenkrichtung 18 verstellbar angelenkt. Damit lässt sich die gemäß Zeichnung kleinere Spaltbreite Y, welche den zweiten bzw. letzten Prozeßabschnitt bei der Teigverarbeitung zugeordnet ist, an Anforderungen aufgrund jeweiliger Teigstruktur und dergleichen anpassen. Insbesondere lässt sich über Verschwenken 18 das zweite Auflageende 16 des Führungsprofils 13 derart nach oben verstellen, dass der elastische Bandabschnitt 5 vom ersten Führungsorgan bzw. der Basiswalze ausgehend eine ansteigende Rampe bildet. Dadurch ist gewährleistet, dass der zweite bzw. letzte Spaltabschnitt mit geringerer Spaltbreite Y eingestellt werden kann als der erste Spaltabschnitt, der vom ersten Form-Förderorgan 2 und dem gegenüberliegenden Satellitenkopf S gebildet ist.

Gemäß Zeichnung ist die Gelenkstelle 17 bzw. das erste Auflageende 15 des Führungsprofils 13 mit einem solchen geringen Abstand zum ersten Form-Förderorgan 2 angeordnet, dass das darum herumgezogene Förderband 6 auf der gekrümmten Mantelfläche des Förderorgans 2 bzw. der Basiswalze gleitet bzw. streift. Indem so dass Förderband 6 auf der vorgeordneten Basiswalze gleitend beweglich aufliegt, lässt sich davon Mehl übernehmen und an die Unterseite des Teigbands 9 bringen. Dadurch wird verhindert, dass das Teigband 9 bzw. die entsprechende Teigmasse sich mit dem Förderband 6 verklebt.

Wie in der Zeichnung erkennbar, wird Teigmasse, gegebenenfalls bereits grob vorgeformt zu einem Rohteigband 19, dem ersten Abschnitt mit der größeren Spaltbreite X des Formspalts 1 zugeführt. Darin wird in an sich bekannter Weise das Roh-Teigband 19 vom Satellitenkopf S und der gegenüberliegenden Basiswalze als erstes Form-Förderorgan 2 abgewalzt auf die Dicke X. Unmittelbar danach wird ein zweiter Abwalzschritt im nachfolgenden Abschnitt des Formspalts 1 mit der geringeren Spaltbreite Y durch das zweite Förderorgan 3 bzw. das Förderband 6 mit dem elastischen Bandabschnitt 5 zwischen den beiden Auflageenden 15, 16 des Führungsprofils 13 realisiert. Das auf die Spaltbreite X abgewalzte Teigband wird vom ersten Basiswalzen-Förderorgan 2 über dessen Drehung 20 zum zweiten Prozeßabschnitt auf den elastischen Bandabschnitt 5 transportiert. Die einzelnen Satellitenrollen S1, S2, ... geraten während ihres Umlaufs 7 nacheinander jeweils mit dem Teigband 9 auf dem elastischen Bandabschnitt 5 in Berührung. Letzteres bildet gegenüber dem pulsierenden Drücken des Satelliten kopfs S ein elastisches Widerlager, das durch die Folge der Satellitenrollen S1, S2, ... periodisch ausgelenkt wird. Dementsprechend kann sich die Teigmasse im zweiten Prozeßabschnitt mit der geringeren Spaltdicke Y periodisch entspannen und auch zum Fließen kommen. Durch diesen elastischen, zweiten bzw. letzten alt Abwalzschritt ergibt sich für die Struktur und den Rand des Teigbandes eine deutliche Verbesserung.

Wie in der Zeichnung ein Vergleich des Roh-Teigbands 19 und dessen Dicke mit der Dicke Y des fertiggeformten Teigbands zeigt, lässt sich mit den beiden dargestellten Abwalzschritten ein hoher Abwalzgrad bei schonender Teigbearbeitung ohne Einreißen der Teigränder aufgrund der elastischen Teigentspannung im zweiten Abwalzschritt realisieren. Zudem ist eine einfache Einstellung insbesondere der zweiten bzw. letzten Spaltbreite Y durch Verschwenken 18 des Förderband-Führungsprofils 13 gegeben. Sowohl der Schaffung eines elastischen, letzten Abschnitts des Teigband-Formspalts als auch der Anpassung an unterschiedliche Teigsorten dient die Ausgestaltung des Endbereichs 21 des zweiten Form-Förderorgans 3 mit einer keil- oder messerkantenartigen Form, die im Bereich der Gelenkstelle 17 relativ eng beziehungsweise kantenartig gekrümmt ist. Die beiden Schenkel der Keil- oder Messerkantenform werden einerseits durch den genannten Bandabschnitt zur Schaffung des elastischen Formspalts und andererseits durch einen Band-Unterabschnitt 22 gebildet, der um das erste Auflageende 15 herum in den Bandabschnitt 5 übergeht. Der Band-Unterabschnitt 22 kann dann die vorausgehende Basiswalze als erstes Form-Förderorgan 2 gleitend zur Mehlübemahme kontaktieren.
- S: Satelliten kopf
- 1: Teigband-Formspalt
- 2, 3: Form-Förderorgane
- X: größere Spaltbreite
- Y: kleinere Spaltbreite
- 4: Förderrichtung
- S1, S2, ...: Satellitenrollen
- 5: Bandabschnitt
- 6: Förderband
- 7: Umlaufbahn
- 8: Umlaufzentrum
- 9: Teigband
- 10: Keilstück
- 10a: Förderband-Umlauf
- 11, 12: Umlenkrollen
- 13: gekrümmtes Führungsprofil
- 14: konkave Wölbung
- 15: erste Auflagestelle /-ende
- 16: zweite Auflagestelle /-ende
- 17: Gelenkstelle
- 18: Schwenkrichtung
- 19: Roh-Teigband
- 20: Drehung
- 21: Endbereich
- 22: Band-Unterabschnitt

## Patentansprüche

1. Maschinelles Teigband-Herstellungsverfahren, bei dem Teigmasse einem Formspalt (1) zugeführt wird, in dem die Teigmasse oder ein vorgeformtes Roh-Teigband (19) zu einem Teigband (9) verarbeitet und herausbefördert wird, wobei der Verarbeitungs- und Förderprozess in örtlich und zeitlich abgegrenzten, aufeinander folgenden Prozess-Abschnitten (2,X;5,Y) durchgeführt wird, **dadurch gekennzeichnet, dass** in wenigstens einem (5,Y) der Abschnitte mittels einer diesem Abschnitt zugeordneten Formspaltbegrenzung (5,S2) elastisch oder federnd Druck auf die Teigmasse ausgeübt wird.

2. Verfahren nach Anspruch 1, **dadurch gekennzeichnet, dass** im wenigstens letzten (5,Y) der Abschnitte der elastisch-federnde Druck auf die Teigmasse ausgeübt wird.

3. Verfahren nach Anspruch 1 oder 2, wobei den Prozess-Abschnitten (2,X;5,Y) Formspaltabschnitte mit jeweils unterschiedlichen Spaltbreiten (X,Y) zugeordnet sind, **dadurch gekennzeichnet, dass** der elastisch-federnde Druck wenigstens im Formspaltabschnitt mit der kleinsten Spaltbreite (Y) auf die Teigmasse ausgeübt wird.

4. Maschinelles Teigband-Herstellungsverfahren, bei dem Teigmasse einem Formspalt (1) zugeführt wird, in dem die Teigmasse oder ein vorgeformtes Roh-Teigband (19) zu einem Teigband (9) verarbeitet und herausbefördert wird, wobei der Verarbeitungs- und Förderprozess in örtlich und zeitlich abgegrenzten, aufeinander folgenden Prozess-Abschnitten (2,X;5,Y) durchgeführt wird, und die Teigoberfläche dabei mit Mehl beaufschlagt wird, insbesondere nach einem der vorangehenden Ansprüche, **gekennzeichnet durch** die Verwendung wenigstens eines Mehl-Übertragungsmittels, wodurch das Mehl zumindest teilweise von einem Prozess-Abschnitt (2,X) auf einen nachfolgenden (5,Y) übertragen wird.

5. Verfahren nach Anspruch 4, **dadurch gekennzeichnet, dass** das Mehl-Übertragungsmittel darin besteht, zwei aufeinander folgende Prozess-Abschnitte (2,X;5,Y) räumlich und/oder zeitlich einander überlappend zu führen.

6. Verfahren nach Anspruch 4 oder 5, **dadurch gekennzeichnet, dass** das Mehl-Übertragungsmittel darin besteht, Mittel zur Teigformung und - förderung (2,3), die je einem der aufeinander folgenden Abschnitte (2,X;5,Y) zugeordnet sind, miteinander zur Mehlübertragung in Kontakt und/oder Eingriff zu bringen.

7. Anordnung zur Herstellung eines Teigbands (9) mit einem Teigband-Formspalt (1), der begrenzt ist mit einem Satelliten- oder Kalibrierkopf (S) einerseits und einer gegenüberliegenden Form- und Fördereinrichtung andererseits, die mehrere in Förderrichtung (4) hintereinander angeordnete Form-Förderglieder oder -organe (2,3) aufweist, zur Durchführung des Verfahrens nach einem der vorangehenden Ansprüche, **dadurch gekennzeichnet, dass** wenigstens eines (3) der Form-Förderorgane (2,3) mit einer Funktion als elastisches oder federndes Widerlager für anliegenden Teig ausgebildet ist.

8. Anordnung nach Anspruch 7, **dadurch gekennzeichnet, dass** wenigstens das in Förderrichtung (4) letzte Form-Förderorgan (3) mit der elastischen oder federnden Widerlager-Funktion versehen ist.

9. Anordnung nach Anspruch 7 oder 8, wobei die Form-Förderorgane (2,3) dem Satelliten- oder Kalibrierkopf (S) mit unterschiedlichen Abständen beziehungsweise Spaltbreiten (X,Y) gegenüberliegen, **dadurch gekennzeichnet, dass** wenigstens das die kleinste Spaltbreite (Y) bildende Form-Förderorgan (3) mit der elastischen oder federnden Widerlager-Funktion versehen ist.

10. Anordnung nach einem der vorangehenden Ansprüche, **dadurch gekennzeichnet, dass** das Form-Förderorgan (3) mit der elastischen oder federnden Widerlager-Funktion einen dem Satelliten- oder Kalibrierkopf (S) gegenüberliegenden Halte- oder Sützbereich aufweist, der elastisch oder federnd nachgiebig auslenkbar ist.

11. Anordnung nach Anspruch 10, **dadurch gekennzeichnet, dass** der Halteoder Stützbereich gegenüber der vorausgehenden Teigförderrichtung (4) eine ansteigende Rampe bildet.

12. Anordnung nach Anspruch 10 oder 11, **dadurch gekennzeichnet, dass** der Halte- oder Stützbereich mit einem elastischen Förderband (6) realisiert ist, das wenigstens einen dem Satelliten- oder Kalibrierkopf (S) gegenüberliegenden Bandabschnitt (5) aufweist, der zwischen wenigstens zwei Auflage- oder Umlenkstellen (15,16) frei federbar gespannt ist.

13. Anordnung nach Anspruch 12, **dadurch gekennzeichnet, dass** wenigstens zwei der Auflage- oder Umlenkstellen (15,16) mit den Enden eines gekrümmten oder gewinkelten Förderband-Führungsprofils (13) realisiert sind, dessen konkave Seite (14) dem frei federbar gespannten Bandabschnitt (5) und Satelliten- oder Kalibrierkopf (S) zugewandt ist.

14. Anordnung nach einem der vorangehenden Ansprüche, **dadurch gekennzeichnet dass** das oder eines der Form-Förderorgane (3), jeweils mit der elastischen oder federnden Widerlager-Funktion als Bandförderer ausgebildet ist, dessen dem vorausgehenden Form-Förderorgan (2) nächstliegender Endbereich keilförmig und/oder nach Art einer Messerkante gestaltet ist.

15. Anordnung nach Anspruch 14 und einem der Ansprüche 12 oder 13, **dadurch gekennzeichnet, dass** eine dem Satelliten- oder Kalibrierkopf (S) zugewandte Seite des keil- oder messerkantenförmigen Endbereichs des Bandförderers den federbar gespannten Bandabschnitt (5) aufweist.

16. Anordnung zur Herstellung eines Teigbands mit einem Teigband-Formspalt (1), der begrenzt ist mit einem Satelliten- oder Kalibrierkopf (S) einerseits und einer gegenüberliegenden Form- und Fördereinrichtung andererseits, die mehrere in Förderrichtung (4) hintereinander angeordnete Form-Förderorgane (2,3) aufweist, insbesondere nach einem der vorangehenden Ansprüche **dadurch gekennzeichnet, dass** wenigstens zwei aufeinander folgende Form-Förderorgane (2,3) zur Weiterbeförderung von Mehl oder sonstiger Partikel in Kontakt oder Verbindung stehen oder miteinander kommunizieren.

17. Anordnung nach Anspruch 16, **dadurch gekennzeichnet, dass** die beiden Form-Förderorgane (2,3) mit solchen Flächen aneinander liegen, welche zum Gleiten gegeneinander ausgebildet sind.

18. Anordnung nach Anspruch 16 oder 17, **dadurch gekennzeichnet, dass** von den beiden Form-Förderorganen (2,3) das nachfolgende (3) oberhalb des vorausgehenden (2) angeordnet ist.

19. Anordnung nach Ansprüche 15 und 18, **dadurch gekennzeichnet, dass** eine dem Satelliten- oder Kalibrierkopf (S) abgewandte Seite des keiloder messerkantenförmigen Endbereichs des Bandförderers von oben auf dem vorausgehenden Form-Förderorgan (2) aufliegt.
